Europäisches Patentamt

(19) European Patent Office

Office européen des brevets

(11) Publication number : **0 462 755 A1**

# (12) EUROPEAN PATENT APPLICATION

(21) Application number : **91305341.9**

(22) Date of filing : **13.06.91**

(51) Int. Cl.⁵ : **G01N 21/61**

(30) Priority : **21.06.90 GB 9013870**

(43) Date of publication of application :
**27.12.91 Bulletin 91/52**

(84) Designated Contracting States :
**DE FR GB IT**

(71) Applicant : **LASER MONITORING SYSTEMS
LIMITED
Unit 3F, Newlands Science Park
Inglemire Lane, Hull HU6 7TQ (GB)**

(72) Inventor : **Bryant, Frederick John. 7 Potterdale
Drive
Little Weighton Cottingham
North Humberside HU20 3UU (GB)**
Inventor : **Johnston, Sean Francois
34, Acklan Road HEDDON
North Humberside HU12 8NA (GB)**

(74) Representative : **Lees, Clifford
APPLEYARD, LEES & CO. 15, Clare Road
Halifax West Yorkshire, HX1 2HY (GB)**

(54) Detecting the presence of a substance in a fluid.

㊼ A system for detecting the presence of a substance (e.g. carbon dioxide) in a fluid (17) is disclosed in which means (11) for emitting electro-magnetic radiation is provided. Said radiation is arranged to pass through the fluid and means (14) are provided for separating the radiation into first and second components (18,19) and detection means (15,16) are provided for detecting said first and second components.

Signals generated from each of the detection means may be compared and the presence of the substance may be detected by ensuring that one of the radiation components conveys radiation at a wavelength which is affected by the presence of the substance, such as by absorption. The second component should be selected to have a wavelength which is not affected by the presence of the substance and thereby provides a reference signal, allowing variations due to other factors to be eliminated.

figure 1.

EP 0 462 755 A1

The present invention relates to a method of detecting the presence of a substance in a fluid and to a system for detecting the presence of a substance in a fluid.

Methods are known for determining the concentration of a particular gas in a mixture of gases, such as the concentration of carbon dioxide in air, or in other similar gas mixtures. For example, in landfill sites the concentration of carbon dioxide is measured to give an indication of the extent of decay of organic matter. Furthermore, carbon dioxide is also measured in habitated environments as a means of adjusting ventilation and pollution control equipment.

Further applications for the monitoring of carbon dioxide include the monitoring of local gas and gases in the production of food and beverages, including alcoholic beverages. Carbon dioxide is also used in greenhouses to promote plant growth and its concentration may also give an indication as to the ripeness, decay or rate of growth of the plants. In industrial processes, the concentration of carbon dioxide can give an indication of combustion efficiency and of other chemical processes, which in turn may be used to control manufacturing conditions, in addition to straightforward monitoring. The measurement of carbon dioxide concentration also has medical applications where, for example, the monitoring of carbon dioxide concentration in respiratory gases is employed in anaesthesia and cardiovascular testing.

A problem with known methods of detecting the presence of, for example, carbon dioxide is that the testing procedure may be slow and/or inaccurate. It is, therefore, an object of the present invention to provide and improved method for detecting the presence of a substance in a fluid.

According to a first aspect of the invention, there is provided a method of detecting the presence of a substance in a fluid, characterised by the steps of passing a beam of radiation through said fluid, separating said beam into two or more components and comparing a first one or more of said components with a second one or more of said components.

Preferably, said components have different wavelengths, which may be substantially complementary. In a preferred method, the comparison of said components involves comparing the radiation power of said components. Preferably, said radiation is visible or has a wavelength within the infrared region of the spectrum.

According to a second aspect of the invention, there is provided a system for detecting the presence of a substance in a fluid, characterised by means for emitting electro-magnetic radiation, said radiation being arranged to pass through said fluid, means for separating radiation into first and second components and detection means for detecting said first and second components.

Said fluid may be a liquid, a gas or a plasma and the means for emitting electro-magnetic radiation is preferably a light emitting diode. An active region of said light emitting diode may be fabricated from any of groups II, III, IV or VI of the periodic table and preferably an active part of said light emitting diode is fabricated from indium-arsenic-antimony-phosphorus (InAsSbP).

Preferably, said means for separating the radiation into components comprises one or more optical filters and, preferably, said components have substantially different and preferably substantially complementary, wavelengths.

Said optical filter may be a beam splitting filter, a thin film optical filter, a prism, a defraction grating, a neutral density filter or an attenuating filter. Said means for detecting components may be a photo voltaic or photo conductive detector, a pyroelectric detector, a Golay cell, a photo transistor, a photo multiplier tube or a charged coupled device.

Preferably, said detecting means is a lead selenide (PbSe) photo detector. Preferably, a first detected signal of the system is a reference signal and a second detected signal includes information relating to the amount of said substance contained in the fluid, whereby said first signal is used to compensate said second signal for variations in the system.

The system may further comprise a computer, a logic unit, a microprocessor, a memory device, a display device or a recording device.

Preferably, said radiation is modulated at a frequency of modulation in the range of from zero to fifty million (50,000,000) cycles per second. Preferably, said electro-magnetic radiation has a wavelength in the range of from 0.1 micrometre to 100 micrometre. Said substance may be carbon-dioxide and the system may include means for analysing and/or storing data corresponding to a signal of said components.

The invention will now be described by way of example only, with reference to the accompanying drawings, in which:

Figure 1 shows a system, embodying the present invention, for determining the presence of a first substance in a fluid;

Figure 2a shows a spectrum of radiation emission of an electro-magnetic radiation source, consisting of the power of the radiation plotted against the wavelength of the radiation;

Figure 2b graphically represents the transmittance of radiation through a fluid plotted against wavelength;

Figure 2c graphically illustrates the radiation transmission characteristic of a filter;

Figure 2d graphically illustrates a radiation reflection characteristic for a filter; and,

Figure 3 shows another system, embodying the present invention, for determining the presence of a substance in a fluid.

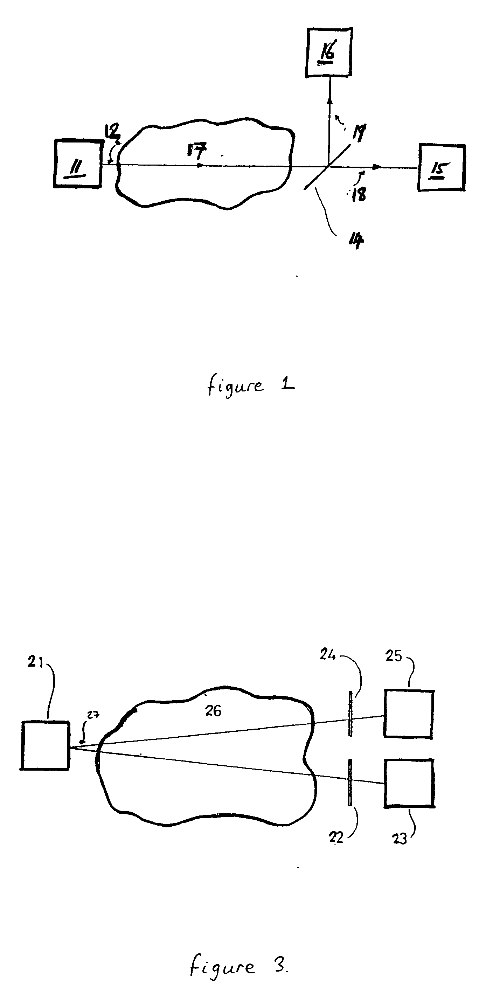

A gas monitoring system, comprising a source of electro-magnetic radiation 11, in the form of a light emitting diode, is shown in Figure 1. The light emitting diode 11 emits infrared radiation 12 over a band of wavelengths and an optical filter 14 selectively transmits or reflects different wavelengths within said band. A first optical detector 15 detects radiation which the optical filter 14 has allowed to pass therethrough and a second optical detector 16 detects radiation reflected by said filter 14. A particular advantage of using a light emitting diode is that the radiation emitted by said diode may be modulated, thereby aiding the detection of said signal and minimising effects introduced by dc drift etc.

The radiation emitted by the light emitting diode 11 passes through a region 17 in which a fluid, a mixture of fluids, a mixture of fluid and particles or a plasma is present. The region 17 may be a chamber, a gas pipe, a fluid outlet, free space, a low pressure chamber or any other cavity or space containing a fluid, mixture or plasma. Contained within the region 17 is a substance which is to be detected, for example, the substance under detection may be carbon dioxide which, as previously stated, requires detection in many working environments. However, the important operating constraint is that the substance being detected must absorb radiation within the band emitted by the light emitting diodes.

The radiation transmitted through the region 17 is split into two components identified in Figure 1 as 18 and 19, by the optical filter 14 and each component is detected by optical detectors 15 and 16 respectively. Due to the nature of the optical filter 14, each radiation component 18 and 19 occupies a substantially different band of optical frequencies.

The optical detectors 15 and 16 each detect the intensity or power of the light directed thereon in beams 18 and 19 respectively and each detector produces an electrical signal which is related to the intensity of its respective beam. For the purposes of this disclosure, it should be understood that the term "optical" includes infrared and ultra-violet radiation in addition to the visible spectrum.

When modulated radiation is used, the resulting electrical signals are also modulated and, as such, may be amplified by means of ac coupled amplifiers. The filter 14 may be a cube type beam splitter or a thin film beam splitter, a prism, a crystal or any other type of beam splitter which spatially separates out different wavelengths of radiation. The detectors 15 and 16 have performance characteristics which are substantially the same for each detector and, therefore, the detectors may be matched one to the other. To facilitate processing of the information obtained, the system also includes a computer or other logic unit for control of the system functions, a storage unit for the storage of data and/or signals and a display device for displaying system data and other related signals.

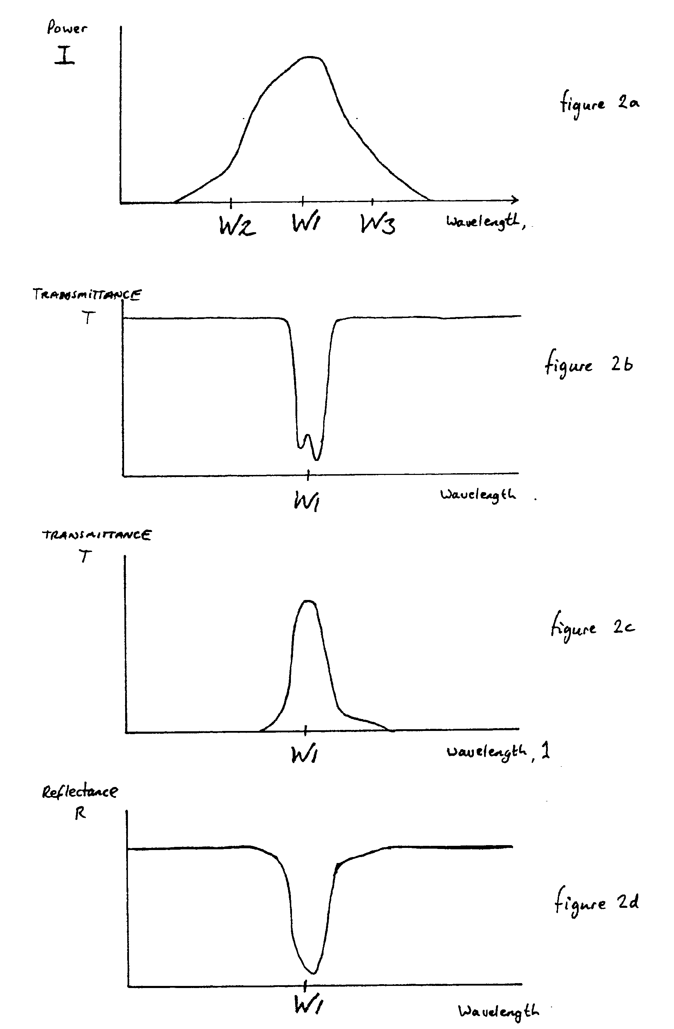

Referring to Figure 2a, a radiation source, for example a light emitting diode, emits radiation with a power intensity I, covering a broad range of wavelengths and having a central wavelength of W1 micro metre. Referring to Figure 2b, a fluid, a mixture or a plasma, of the type identified above with reference to Figure 1, absorbs radiation emitted by the light emitting diode over a band of wavelengths near to the centre wavelength W1. Referring to Figure 2c, an optical filter has a radiation transmission characteristic in which a band of incident radiation about the wavelength W1 is transmitted by the filter. The transmitted band is narrow compared to the band of radiation emitted by the radiation source. Referring to Figure 2d, the filter has a reflection characteristic which is approximately complementary to the transmission characteristic shown in Figure 2c, for the reflected incident radiation. The reflectance shown in Figure 2d and the transmittance shown in Figure 2c are not perfectly complementary, due to light absorption, resulting in power loses.

During operation of the system, the radiation emitted by the light emitting diode 11 may be used to detect the concentration of carbon dioxide present in a fluid or mixture. Infrared radiation from the light emitting diode 11 passes through the fluid in region 17 to the filter 14, whereafter it is split and supplied to optical detectors 15 and 16. The radiation may be substantially omni-directional or it may be focused into a uni-directional beam towards the filter 14.

The characteristic of the radiation produced by the light emitting diode 11 is, as previously identified, illustrated in Figure 2a and when arranged to detect carbon dioxide, the central wavelength W1 is arranged to be as close as possible to 4.2 micro metre, a wavelength which is absorbed to a large extent by carbon dioxide.

The fluid, mixture or plasma in region 17 may be transparent to a wide range of wavelengths of the light emitted, however, if the fluid contains a substantial amount of the detectable substance, carbon dioxide in this example, the presence of the carbon dioxide causes the combined fluids to generate a dip in the transmission characteristic, as shown in Figure 2b, in which certain wavelengths of the radiation are absorbed by the carbon dioxide. Thus, in addition to absorbing light having a wavelength of 4.2 micro metre, carbon dioxide will also absorb infrared radiation having a wavelength of 7.46 micro metre and 15 micro metre.

The power of radiation incident on each of the detectors 15 and 16 is determined by several factors, including the power of the radiation emitted by the source 11, the level of reflection, scattering and absorption by the fluid, mixture or plasma due to its opacity, density of the fluid contained within the region 17 and the alignment of the components. Thus, to achieve optimum results, the components should be optically aligned in a stable position so that, once set up, variations in power due to variation in system alignment are small and/or affect the power received by each of the detectors to the same extent, whereafter this influence may be cancelled out. The system is initially calibrated, after fixing the alignment, by passing a fluid into the region 17 which is free of or has a known amount of the substance to be detected. Thereafter, the signals received from each detector are compared and processed by suitable equipment, such as a computer or micro processor. Thus, the calibration takes account of differences in detector characteristics and/or optical alignment.

Changes in the emitted radiation power of the source are cancelled by comparison of the signals for the first and second detectors 15 and 16. Such a comparison can be in the form of a division of the first signal from a detector 15 by a signal from the second detector 16 and such a division may be performed by analog or digital circuitry. A resulting signal represents a density of carbon dioxide present in the fluid, mixture or plasma and may be stored in a memory device, used to actuate logic operations in a computer or microprocessor or used to activate an alarm or valve system, arranged to activate a display to an operator, recorded or otherwise acted upon in a suitable way.

Referring to Figure 3, an alternative monitoring system, embodying the present invention, is shown. The system has a radiation source 21 which emits radiation 27 towards optical detectors 23 and 25 via a test region 26 and filters 22 and 24. The region 26 contains a fluid or a mixture, similar to that previously described, in which a substance (for example carbon dioxide) is to be detected. The principle of operation of the system is similar to that described with respect to the system shown in Figure 1, however, the filter arrangement shown in Figure 3 differs from that shown in Figure 1.

In the embodiment shown in Figure 3, the two filters 22 and 24 are each selected to cover different wavelength bands, which are substantially non-overlapping with each other. One of the filters is a band pass filter, which is selected to pass a band of wavelengths which broadly coincides with a band of wavelengths which is absorbed by the substance in the fluid, for example, the absorbed band of wavelengths corresponding to the dip in Figure 2b. Such a filter characteristic may, for example, be as shown in Figure 2c. The other filter can have either a band pass or a band reject characteristic and, in the case of a band reject characteristic, a filter can, for example, have pass wavelengths on either side of the band of the wavelengths which are highly absorbed by the substance, while attenuating radiation of the same band of wavelengths which are highly absorbed by the substance.

In the alternative arrangement, the other filter is a band pass filter, arranged to pass a band of wavelengths which does not coincide with the band absorbed by the substance, or with the band covered by the first filter, although still being a band which is within the range of wavelengths emitted by the radiation source. An example of such a band may be that centred around the wavelength W2 shown in Figure 2a, but not overlapping the dip of the characteristic centred about the wavelength W, shown in Figure 2b.

The optical detectors 23 and 25 may each have characteristics which are closely matched to each other and, ideally, have a flat broad band wavelength response.

In operation, a signal of the first detector is proportional to the radiation power transmitted by the first filter is related mainly to the power output of the radiation source and to the amount of radiation absorbed by the fluid of the mixture in the region 26. A signal of the second detector is proportional to the power transmitted through the second filter and is related substantially only to the power output of the radiation source. Thus, one wavelength band of radiation from a single source, which is not absorbed by the carbon dioxide, may be used to provide a reference signal which relates to the amount of power radiated, the general amount of broad band scattering and/or absorption due to the fluid. The second wavelength band originates from the same radiation source and experiences the same conditions of scattering and radiation power but, being also directly absorbed by the carbon dioxide, may be also used to provide a signal which is dependent upon the amount of carbon dioxide present in the fluid.

Thus, by comparing the second signal to the first signal, the part of the second signal which relates to the carbon dioxide content of the fluid may be extracted. Such a comparison may be made as described hereinabove with reference to Figures 1 and 2.

The above described preferred embodiments may include more than two filters and corresponding detectors, such that third and extra filters each pass a band of frequencies corresponding to a second or subsequent substance in the fluid or mixture, for detection of a multiplicity of substances in the fluid or mixture. The aforementioned filters may be plate glass, crystal or thin film visible, infrared or ultra violet filters. Any radiation source which emits anywhere in the wavelength range from about 100 micro metre to 0.1 micro metre may be used. Such sources may comprise a small rod of silicon carbide, a composition of zirconium and/or thorium and/or cerium, which are electrically heated. Other variations may also be used, for example a hot filament which emits a broad range of infrared radiation.

When a light emitting diode is used, said diode may be made of any semiconductor compound derived from a composition of elements of groups II, III, IV and/or V of the periodic table of elements, for example a light emitting diode which is made from InAsSbP and fabricated on an InAs substrate. The detection means may be a photodetector such as a lead selenide (PbSe) photodiode.

As an alternative to using a broad band of wavelengths, it is also possible to employ a multiplicity of essentially discrete wavelengths. Such a range of discrete wavelengths may be obtained from a multimode or monomode diode laser, which emits a number of discrete wavelengths at predetermined positions within the spectrum. Such a laser diode source may have an advantage of being arrangeable to concentrate the radiation into a narrow beam, facilitating the accurate alignment of components.

It is possible that the radiation from a laser could be routed through optical fibre and emitted from the said fibre at the site of the fluid. Such an arrangement may provide the advantage of enabling a single laser to be used for a number of sensor systems, wherein such sensor systems may be arranged in an area or along a vessel or pipe containing the fluid, to form a distributed or extended sensor system having radiation supplied from a single laser source. In such an application, a high power laser may be required, such as a carbon dioxide laser.

The system need not necessarily consist of semiconductor or photo multiplier devices at the site of the fluid and may, alternatively, comprise a lens, mirror and/or optical fibre arrangement for transmission of the respective light components to a site remote from the fluid. Combined with the aforementioned optical fibre delivery of light, detection of the light components via optical fibre may have an advantage that no electrical components are positioned at the site of the fluid, thereby eliminating fire risk due to the production of electrical discharge from the electrical components.

An advantage of the systems disclosed herein is that, owing to the lack of moving parts, the systems have increased robustness and require less maintenance. A light emitting diode and a fixed filter arrangement according to a preferred embodiment of the present invention may have an advantage of forming a very compact assembly, which can be practically mounted in a small volume. Such an assembly may also provide the advantage, in use, of being less intrusive to laminar fluid flows.

The above described preferred embodiments of the present invention may have an advantage that mechanical chopper devices, arranged to modulate the intensity of radiation, are unnecessary for their operation. The preferred embodiments may have further advantages that the component cost is reduced by alleviating a need for a mechanical chopper. Owing to the absence of such mechanical chopper and the associated electric motor, sparks from the brushes of such a motor may be avoided and the preferred embodiments may therefore be safer for use in hazardous conditions where explosive fluids are present.

Furthermore, the preferred embodiments may have an advantage of low power consumption, enabling battery powered embodiments, for example as may be used in remote locations where a cable power supply was inconvenient, such as under sea or in desert locations. Where such a battery powered unit is used in a hazardous environment, the unit may be sealed for the life of the unit, thus avoiding the possibility of sparks from electrical connections.

By employment of a light emitting diode with associated detectors and circuitry, preferred embodiments of the present invention may operate with light modulation frequencies in the range of from zero hertz to fifty gigahertz. The preferred embodiments may thus have an advantage of quick response time and may have an ability to measure changes in parameters of fluids which flow at high rates of flow, for example in high pressure fluid supply lines.

The preferred embodiments of the present invention may also be adapted to detect other substances and are not limited to the detection of carbon dioxide, for example compounds which have molecules which contain atoms of carbon, hydrogen, nitrogen, oxygen and any organic molecule, although the invention is not limited to the detection of these exemplary compounds.

## Claims

1. A method of detecting the presence of a substance in a fluid, characterised by the steps of passing a beam of radiation through said fluid, separating said beam into two or more components and comparing a first one or more of said components with a second one or more of said components.

2. A method according to Claim 1, in which said first one or more component(s) has or have substantially different wavelength(s) from said second one or more components.

3. A method according to Claim 1 or Claim 2, in which said comparing of said first and second components is a comparison between signals corresponding to a radiation power of said first one or more components with a signal corresponding to a radiation power of said second one or more components.

4. A method according to Claim 3, wherein said comparison is a division of said signal.

5. A method according to any one of said preceding claims, in which said beam of radiation is a beam of visible or infrared radiation.

6. A system for detecting the presence of a substance in a fluid (17), characterised by means (11) for emitting electro-magnetic radiation, said radiation being arranged to pass through said fluid, means (14) for separating said radiation into first and second components (18,19) and detection means (15,16) for detecting said first and second components.

7. A system according to Claim 6, wherein said fluid (17) is a liquid, gas or plasma.

8. A system according to Claim 6 or Claim 7, wherein said means for emitting electro-magnetic radiation is a light emitting diode (11).

9. A system according to Claim 8, wherein an active region of said light emitting diode (11) is made of an element from any one or more of groups II, III, V, VI of the periodic table of elements.

10. A system according to Claim 9, wherein an active part of said light emitting diode is made of InAsSbP.

11. A system according to any one of the preceding claims, wherein said means (14) for separating the radiation into first and second components comprises one or more optical filters.

12. A system according to any one of Claims 6 to 11, wherein said first and second components of radiation (18, 19) are components having substantially different bands of wavelength to each other.

13. A system according to Claim 11 or Claim 12, wherein a said optical filter (14) is one of the following: a beam splitting filter, a thin film optical filter, a prism, a neutral density filter or an attenuating filter.

14. A system according to any one of Claims 6 to 13, wherein said means for detecting first and second components is one of the following; a photo diode detector, a photo transistor, a photo multiplier tube or a charge coupled device.

15. A system according to any one of Claims 6 to 14, wherein one of said detection means (15,16) is a lead selenium (PbSe) photo detector.

16. A system according to any one of Claims 6 to 15, wherein a first detector signal is a reference signal of the system and a second detected signal includes information on the amount of said substance contained in the fluid and said first signal is used to compensate said second signal for variables of the system.

17. A system according to any one of Claims 6 to 16, further comprising any one or more of the following: a computer, a logic unit, a microprocessor, a memory device or a display device.

18. A system according to any one of Claims 6 to 18, wherein one of said substances is a gas.

19. A system according to any one of Claims 6 to 18, wherein said radiation is modulated at a frequency of modulation in the range from zero to fifty gigahertz.

20. A method according to any of Claims 6 to 19, wherein said substance is carbon dioxide.

21. A system according to any of Claims 6 to 21, further comprising means for analysing and/or storing data corresponding to a signal of first and second components.

figure 1

figure 3.

figure 2a

figure 2b

figure 2c

figure 2d

8

European Patent Office

**EUROPEAN SEARCH REPORT**

Application Number

EP 91305341.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US - A - 4 914 719 (CONLON) * Abstract; fig. 5-8; column 8, line 51 - column 9, line 38 * | 1-3,5-7,11, 16-18, 21 | G 01 N 21/61 |
| Y | | 4,8,20 | |
| Y | US - A - 4 782 232 (BERNSTEIN) * Abstract; fig. 1; column 6, lines 22-26; column 4, lines 38,39 * | 4,20 | |
| Y | SOVIET INVENTIONS ILLUSTRATED, El section, week 8621, July 2, 1986 DERWENT PUBLICATION LTD., London, S 03 page 31 * SU-1187-033 (ANALYT ENG FACILITY) * | 8 | |
| | | | **TECHNICAL FIELDS SEARCHED (Int. Cl.5)** |
| X | US - A - 4 673 812 (YONEDA) * Fig.; column 2, line 11 - column 3, line 31 * | 1-3,5-7,11, 12,16, 18 | G 01 N G 01 D G 01 J |
| A | US - A - 4 499 379 (MIYATAKE) * Abstract; fig. * | 1,6 | |

The present search report has been drawn up for all claims

| Place of search | Date of completion of the search | Examiner |
|---|---|---|
| VIENNA | 13-09-1991 | NARDAI |

EPO FORM 1503 03.82 (P0401)